# EUROPEAN PATENT APPLICATION

(11) **EP 2 505 235 A1**
(43) Date of publication of application: **03.10.2012**
(21) Application number: 12002249.6
(22) Date of filing: 28.03.2012
(51) Int. Cl.: A63B 24/00, A63B 5/11

(54) **Trampoline with feedback system**

(30) Priority: 28.03.2011 US 201161468486 P; 03.05.2011 US 201161481906 P
(71) Applicant: Yjip, Inc., Addison, Texas 75001 (US)
(72) Inventor: Tseng Hsiang, Lin, Addison, Texas 75001 (US)
(74) Representative: Grosse, Rainer

(57) **Abstract**

A trampoline includes a frame and a jumping mat assembly that is supported by the frame to allow at least one user to bounce thereon. The trampoline also includes a sensor system that includes a plurality of sensors that are supported by the frame and/or the jumping mat assembly. The plurality of sensors are spaced apart from each other. At least two of the plurality of sensors generate a respective signal due to the user impacting the jumping mat assembly. The trampoline further includes a feedback system that provides a feedback signal and a controller that compares the respective signals from the sensors to determine a status of user. The controller is operable to cause the feedback system to provide the feedback signal according to the determined status of the user.

## Description

### CROSS-REFERENCE TO RELATED APPLICATIONS

This application claims the benefit of U.S. Provisional Application No. 61/468,486, filed March 28, 2011, and U.S. Provisional Application No. 61/481,906, filed May 3, 2011. The entire disclosures of each of the above applications are incorporated herein by reference.

### FIELD

The present disclosure relates to a trampoline and, more particularly, relates to a trampoline with a feedback system.

### BACKGROUND

This section provides background information related to the present disclosure which is not necessarily prior art.

Trampolines have been proposed with one or more lights or speakers that emit light and/or sound when being used. Although the light and/or sound can enhance the experience of bouncing on a trampoline, these systems have certain limitations. For instance, the lights and/or speakers provide very limited feedback or information. Also, the lights, speakers, or other components can be prone to breakage or malfunction, especially in trampolines that are located out-of-doors or in other potentially harsh environments.

### SUMMARY

This section provides a general summary of the disclosure, and is not a comprehensive disclosure of its full scope or all of its features.

A trampoline is disclosed that includes a frame and a jumping mat assembly that is supported by the frame to allow at least one user to bounce thereon. The trampoline also includes a sensor system that includes a plurality of sensors that are supported by the frame and/or the jumping mat assembly. The plurality of sensors are spaced apart from each other. At least two of the plurality of sensors generate a respective signal due to the user impacting the jumping mat assembly. The trampoline further includes a feedback system that provides a feedback signal and a controller that compares the respective signals from the sensors to determine a status of user. The controller is operable to cause the feedback system to provide the feedback signal according to the determined status of the user.

Also, a trampoline is disclosed that includes a frame and a jumping mat assembly that is supported by the frame to allow a user to bounce thereon. The trampoline also includes an enclosure system that encloses at least a portion of the jumping mat assembly. The trampoline further includes a sensor system that detects the user impacting the enclosure system and a feedback system that provides a feedback signal when the sensor system detects the user impacting the enclosure system.

Moreover, a trampoline is disclosed that includes a frame and a jumping mat assembly that is supported by the frame to allow at least one user to bounce thereon. The trampoline also includes an enclosure system that encloses at least a portion of the jumping mat assembly. The enclosure system includes a vertical support that is coupled to the frame and that extends away from the frame. The enclosure system also includes a flexible wall member that is supported by vertical support. Furthermore, the trampoline includes a sensor system that includes a plurality of first sensors that are coupled to one of the frame and the jumping mat assembly to detect bouncing of the at least one user on the jumping mat. The first sensors are spaced apart from each other. The sensor system also includes a second sensor that is fixed to one of the vertical support and the flexible wall member to detect impact of the at least one user with the enclosure system. The trampoline further includes a feedback system that provides a feedback signal and a controller that compares output from the plurality of first sensors to determine a status of the at least one user. The controller is operable to cause the feedback system to provide the feedback signal according to the determined status of the at least one user. The controller is also operable to cause the feedback system to provide the feedback signal when the second sensor detects impact of the user with the enclosure system.

Still further, a method of providing feedback for at least one user of a trampoline is disclosed. The method includes generating signals from at least two sensors due to at least one user impacting a jumping mat assembly of the trampoline. The at least two sensors are supported by the trampoline and are spaced apart from each other. The method further includes comparing the signals of the at least two sensors and detecting a status of the at least one user based on the comparison of the signals. Moreover, the method includes providing a feedback signal based on the detected status.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.

FIG. 1 is a schematic view of a trampoline with a feedback system according to exemplary teachings of the present disclosure;

FIG. 2 is a top view of a feedback system and a sensor for the trampoline of FIG. 1 according to exemplary teachings of the present disclosure;

FIG. 3 is an exploded view of one or more components of the feedback system of FIG. 2; and

FIG. 4 is a flow chart illustrating a method of operation of the trampoline of FIG. 1.

Corresponding reference numerals indicate corresponding parts throughout the several views of the drawings.

### DETAILED DESCRIPTION

Example embodiments will now be described more fully with reference to the accompanying drawings.

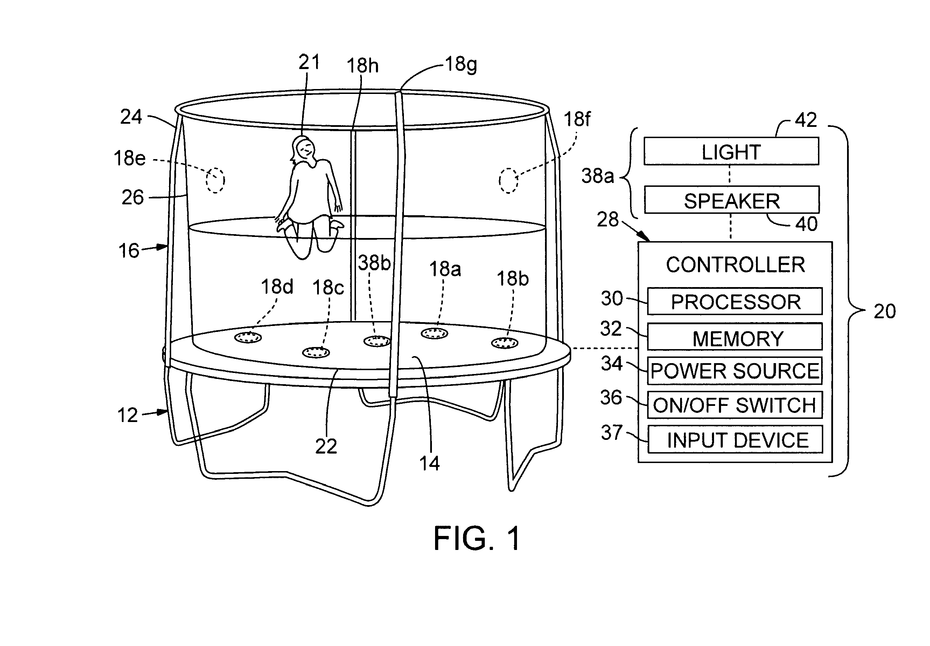

Referring initially to FIG. 1, exemplary embodiments of a trampoline 10 are illustrated. As shown, the trampoline 10 can generally include a frame 12, a jumping mat assembly 14, an enclosure system 16, one or more sensors 18a-18h, and a feedback system 20. As will be discussed in greater detail, the sensor(s) 18a-18h can detect activity, status, etc. of one or more users 21 on the jumping mat 14, and the feedback system 20 can provide one or more feedback signals (e.g., sound, visual signals, tactile signals, etc.) in response to the detected activity, status, etc. As such, the feedback system 20 can provide a variety of information to the user(s) 21.

In some embodiments, the sensors 18a-18h and feedback system 20 of the trampoline 10 can detect and/or provide information regarding: 1) the location of the user 21 relative to the jumping mat assembly 14; 2) whether the user 21 has completed a predetermined movement relative to the jumping mat assembly 14; and/or 3) the number of the users 21 that are bouncing or otherwise located atop the jumping mat assembly 14. Additionally, the sensors 18a-18h and feedback system 20 of the trampoline 10 can detect and/or provide information when: 1) the user 21 impacts the enclosure system 16; 2) the user 21 is within a predetermined distance of a peripheral edge 22 of the jumping mat assembly 14 (e.g., to act as a warning for the user 21); and/or 3) the user 21 has completed or travelled a "lap" around the jumping mat assembly 14. Thus, the sensors 18a-18h and feedback system 20 of the trampoline can greatly enhance the experience of using the trampoline 10.

The features of the trampoline 10 will now be discussed in greater detail. The frame 12 can include a plurality of strong, rigid, elongate poles or other similar structures. For instance, the frame 12 can include steel or aluminum poles that are removably attached together. The frame 12 can include vertically extending legs, horizontally extending members that extend between the legs, and the like.

Moreover, the jumping mat 14 can be a relatively thin, flexible, woven material that is strong enough to support users that bounce thereon. The jumping mat 14 can include a peripheral edge 22. The edge 22 can be rounded (e.g., circular), polygonal (e.g., rectangular, square, etc.), or the edge 22 can have any other shape.

A plurality of springs (not shown) or other resilient members can operably couple the mat 14 to the frame 12. The springs can be evenly spaced about the edge 22. One end of each spring can be attached to the edge 22, and the opposite end of each spring can be attached to the horizontal members of the frame 12. Accordingly, when the user 21 bounces on the mat 14 and deflects the mat 14 downward, the springs can resiliently deflect and then recoil. As such, the user 21 can be repeatedly propelled into the air from the mat 14.

The enclosure system 16 can include one or more vertical supports 24 (e.g., poles) that are connected to the frame 12 and that extend upward from the frame 12. The vertical supports 24 can be substantially rigid, or the vertical supports 24 can be somewhat resilient. The enclosure system 16 can also include a wall member 26. The wall member 26 can be a thin, flexible sheet of material that is connected to the top ends of the vertical supports 24 and that is connected to the frame 12 and/or the edge 22 of the mat 14 to thereby enclose the jumping mat 14. In some embodiments, the wall member 26 includes netting or other similar material. During use, the enclosure system 16 can maintain the user 21 on the jumping mat 14. For instance, if the user 21 bounces laterally off of the mat 14 toward the wall member 26, the wall member 26 can limit lateral movement of the user 21 such that gravity directs the user 21 back toward the mat 14.

The sensors 18a-18h can be of any suitable type, and the sensors 18a-18h can be used for detecting a variety of conditions related to the one or more users 21 on the mat 14. For instance, one or more of the sensors 18a-18h can include a transducer that transforms mechanical energy associated with the bouncing of the user to a corresponding electrical signal, and the electrical signal can be used by the feedback system 20 for purposes that will be discussed below.

At least one of the sensors 18a-18h can include a commercially-available accelerometer, proximity sensor, camera, motion detector, piezoelectric sensor, or other type. Also, the trampoline 10 can include any suitable number of sensors 18a-18h, and the sensors 18a-18h can be disposed in any suitable location.

For instance, the sensors 18a, 18b, 18c, and 18d (i.e., mat sensors) can be operably coupled to the jumping mat 14. As shown in FIG. 1, for example, the sensors 18a, 18b, 18c, 18d can be evenly spaced from each other (e.g., separated by ninety degrees adjacent the edge 22 of the mat 14). Also, in some embodiments, the sensors 18e, 18f (i.e., first enclosure sensors) can be coupled to the wall member 26 of the enclosure system 16, and the sensors 18g, 18h (i.e., second enclosure sensors) can be coupled to the vertical supports 24 of the enclosure system 16. The sensors 18e, 18f, 18g, 18h can be evenly spaced from each other (e.g., separated by ninety degrees about the enclosure system 16). Similar sensors can also be attached to the frame 12.

The sensors 18a-18h can be used to detect various conditions (i.e., bouncing conditions) related to the user(s) 21 on the mat 14. More specifically, each sensor 18a-18h can be triggered to output a signal (e.g., an electric signal) when a load (i.e., a bouncing load) is applied to the mat 14 and/or the enclosure system 16. In some embodiments, the sensors 18a-18h can be triggered only if the bouncing load exceeds a predetermined threshold. Furthermore, the sensors 18a-18h can be triggered if displaced from a neutral position beyond a predetermined distance (vertically and/or laterally). Also, because the bouncing loads can be substantially localized, the sensitivity of the sensors 18a-18h can be adjusted such that only those sensors 18a-18h adjacent the applied load are triggered. As such, the location or other status of the user 21 can be detected by the sensors 18a-18h.

Furthermore, in some embodiments, a single bouncing load of the user 21 (e.g., impact of the user 21 with the mat 14 and/or displacement of the mat 14) can trigger multiple sensors 18a-18h (at least two sensors 18a-18h) simultaneously. Also, in some embodiments, two or more sensors 18a-18h can output different signals, depending on the spatial relationship between the bouncing load and the particular sensor 18a-18h. For instance, a sensor 18a-18h directly adjacent the applied bouncing load can output a stronger signal than another sensor 18a-18h that is remote from the applied load. The signals can differ from each other by output signal voltage, current, frequency, wavelength, etc. based on the location of the particular sensor 18a-18h relative to the applied load. Thus, the different signals from the multiple sensors 18a-18h can be compared to thereby detect the location, movement, or other status or condition of the user(s) 21 as will be discussed.

The feedback system 20 can further include a controller 28. The controller 28 can be a computerized device having a processor 30, a memory device 32, and other computerized hardware. In some embodiments, the controller 28 can include a communications system that can communicate (e.g., wirelessly) with the Internet or other computerized network. The memory device 32 can include Random Access Memory (RAM) and/or Read Only Memory (ROM) and can store various software, programmed logic, and the like. The controller 28 can be in operable communication with the sensors 18a-18h.

The controller 28 can also include a power source 34 that supplies electricity thereto. The power source 34 can include one or more batteries. Also, in some embodiments, the controller 28 can include a power cord for electrically connecting to a conventional power outlet.

The controller 28 can additionally include an ON/OFF switch 36. The switch 36 can be a manual switch with which the user can manually turn the power supply from the power source 34 ON and OFF. Also, in some embodiments, the switch 36 can be an automatic switch that automatically turns the power supply ON and OFF. For instance, if the sensors 18a-18h do not detect any jumping activity for a predetermined amount of time (e.g., five minutes), the switch 36 can automatically switch the power supply OFF.

In some embodiments, the controller 28 can also include an input device 37 with which the user can provide input. For instance, the input device 37 can include a keypad, keyboard, knobs, control dials, etc. The input device 37 can also be used for selecting among different programs loaded on the controller 28, which will be discussed in greater detail below.

The feedback system 20 can also include one or more feedback devices 38a, 38b. There can be any number of feedback devices 38a, 38b, and the feedback device(s) 38a, 38b can be of any suitable type. For instance, the feedback system 20 can include an audible transducer, such as a speaker 40 that emits a sound in response to electrical signals from the sensors 18a-18h. The speaker 40 can output a beep, speech, or any other suitable sound. The feedback system 20 can also include a visual transducer, such as one or more lights 42 (e.g., light emitting diodes or LEDs, etc.), that emit a light in response to electrical signals from the sensors 18a-18h. Also, the light(s) 42 can emit a variety of colors, depending on the signals sent from the sensors 18a-8h. The feedback devices 38a, 38b can also include a display (e.g., a computer screen) providing more detailed visual information. The system 20 can also include other types of feedback devices 38a, 38b, such as tactile feedback devices (not shown) that selectively vibrate or provide another type of tactile feedback or olfactory feedback devices that selectively emit an odor.

The feedback devices 38a, 38b can be disposed in any suitable location relative to the frame 12. For instance, one or more of the feedback devices 38b can be attached to or directly adjacent the frame 12, the mat 14, and/or the enclosure system 16 such that the users 21 bouncing on the mat 14 can see, hear or otherwise receive the feedback signals from the devices 38b. In the embodiments illustrated in FIG. 1, for example, the feedback device 38b is fixedly attached to the underside of the mat 14 and is substantially centered on the mat 14. Also, as shown in the embodiments of FIG. 1, the feedback device 38a can be remote from the frame 12, the mat 14, and the enclosure system 16. For example, the feedback devices 38a can be located inside a house while the frame 12, mat 14, and enclosure system 16 are located outside the house, and as such, parents or other occupants within the house can see/hear the feedback signals for remotely monitoring bouncing activity on the mat 14. Although only the feedback device 38a is shown as including both a light 42 and a speaker 40, it will be appreciated that the feedback device 38b can also include a light 42, a speaker 40, and/or a feedback device for providing another type of feedback signal.

In use, the sensors 18a-18h and feedback system 20 can act as a safety system or alarm. For instance, in some embodiments, the system 20 can be activated to emit feedback signals if the sensors 18a-18h detect any bouncing on the mat 14. Accordingly, the system 20 can assist parents in making sure that no kids are bouncing on the mat 14 without supervision.

Also, during normal bouncing, the system 20 can be used for notification that someone has bounced too close to the edge 22 of the mat 14. For instance, in some embodiments, the processor 30 can compare the signal strength of the signals sent from each of the sensors 18a-18h. In some embodiments, the sensors 18a-18d distributed about the edge 22 of the mat 14 are compared. If the difference between the signals from these sensors 18a-18d is largely the same (e.g., within a predetermined threshold), then it can be assumed that the user is safely bouncing within the center area of the mat 14, and no feedback signals will be provided by the feedback devices 38. However, if one of signals from one of the sensors 18a-18d is substantially stronger than the others, it can be assumed that the user is bouncing too close to the edge 22, and the controller 28 can activate the feedback devices 38a, 38b to act as warning alarm.

Furthermore, the processor 30 can compare signal strengths from the sensors 18a-18h to ensure that only one user is bouncing on the mat 14 at a time. For instance, if only one user is bouncing, the sensors 18a-18h can generate signals at substantially similar signal strengths (i.e., within a predetermined threshold), and no feedback signal will be emitted. However, if multiple users begin bouncing, the signal strengths from the sensors 18a-18h are likely to be unbalanced (i.e., one sensor 18a-18h is likely to emit a signal that is substantially stronger than the others), and the controller 28 can cause the feedback devices 38 to emit the audible/visual feedback as a result.

Additionally, the system 20 can be used to track bouncing activity. For instance, the sensors 18a-18h can track the user's movement about the mat 14. In some embodiments, the user can repeatedly run and bounce about the edge 22 while performing "laps," and the sensors 18a-18h can be triggered in succession during this activity to track the progress of the user 21. The controller 28 can cause the feedback devices 38 to notify the user after each lap has been completed, and/or the memory device can store the number of "laps" that have been completed so that the user can track his or her progress. The feedback devices 38 can also display the corresponding number of calories burned during activity, the amount of time spent bouncing, or other information about the workout. Other exercise routines can also be tracked and/or other movements can be tracked. Moreover, this information can be stored in the memory device 32 such that the user can review past workouts and track workout progress over time.

Still further, the mat 14 can include visible targets, and the sensors 18a-18h can be located directly adjacent those targets. Then, the feedback devices 38 can emit feedback signals if the user bounces on and contacts a particular target. The feedback devices 38 can also emit different feedback signals if the user misses the target.

Accordingly, the feedback system 20 can be a useful tool for monitoring bouncing activity on the mat 14. The system 20 can be safer than other trampolines, and the system 20 can also assist the user as an exercise tool.

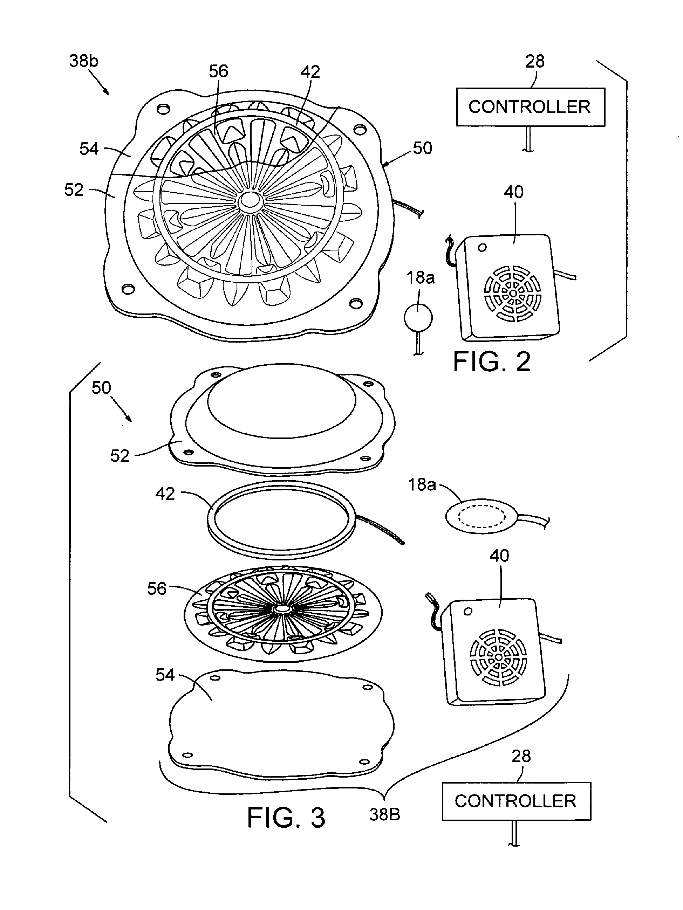

Referring now to FIGS. 2 and 3, the feedback device 38b will be discussed according to exemplary embodiments. It will be appreciated that the feedback device 38a can also include similar features.

As best shown in FIG. 3, the feedback device 38b can include a housing 50 with a top 52 and a bottom 54. The housing 50 can be platter shaped, and the top 52 and bottom 54 can overlap and attach together to cooperatively house and substantially seal a reflector plate 56 and the light 42 therein. The top 52 and bottom 54 of the housing 50 can be made out of plastic or other weather-proof material.

The reflector plate 56 can be round and can be made out of a mirror-like or reflective material. The reflector plate 56 can also include a number of projections or other surface contours for reflecting light in multiple directions.

Furthermore, the light 42 can include a number of LEDs or other light emitting devices that are arranged annularly atop the reflector plate 56. A wire or other connector can extend from the light 42 and out of the housing 50 to connect to the controller 28. In other embodiments, the light 42 can be wirelessly connected to the controller 28.

The housing 50 can be centered and attached to the underside of the mat 14 by adhesives, fasteners, etc. Also, in some embodiments, the mat 14 can include a pocket (not shown) that receives the housing 50. Accordingly, the light 42 can be readily seen by the user 21 during use.

Also, the speaker 40 of the feedback device 38b can be operatively connected to the light 42 and/or the controller 28 wirelessly or via a wireless connection. The speaker 40 can be mounted to the frame 12, to the mat 14, to the enclosure system 16, or elsewhere. Thus, the user 21 can readily hear the audible feedback from the speaker 40.

An exemplary sensor 18a is also illustrated in FIGS. 2 and 3. The other sensors 18b-18h can be similar to the sensor 18a illustrated. The sensor 18a can be round, flat, and small (e.g., about the size of a penny). Also, the sensor 18a can be connected to the controller 28 wirelessly or via a wired connection. The sensor 18a can be fixed to the mat 14 (i.e. fixed directly to the mat 14 only) via adhesives, via fasteners, or any other means. Moreover, in some embodiments, the mat 14 or wall member 26 of the enclosure system 16 can include a pocket that receives the sensor 18a. In the embodiments shown, displacement of the mat 14 and/or wall member 26 above a predetermined threshold triggers the sensor 18a.

The sensor 18a can be a springless type of sensor (e.g., one that does not rely on a biasing member to open and close an electrical switch to detect jumping on the trampoline 10, etc.). The sensor 18a could include an accelerometer (e.g., a sensor with a suspended mass that is displaced when users 21 jump on the mat 14 to trigger a signal). The sensor 18a can also be a piezoelectric sensor or other type of transducer. The sensor 18a can also be a motion detector that emits a beam of infrared or other light, and when the light beam is broken by the presence of a user 21, the sensor 18a can transmit a corresponding electric signal. The sensor 18a can also rely on a camera to visually detect users 21. The sensor 18a can further include an acoustic sensor that detects sounds from users 21 to detect their presence. Moreover, the sensor 18a can be an occupancy sensor that is integrated with a timing device such that when motion has stopped for a predetermined amount of time, a light extinguishing signal is triggered to detect that there are no users 21 on the trampoline 10. Moreover, the sensor 18a can include passive infrared (PIR) sensors, ultrasonic (active) sensors, and microwave (active sensors) to operate as a motion detector.

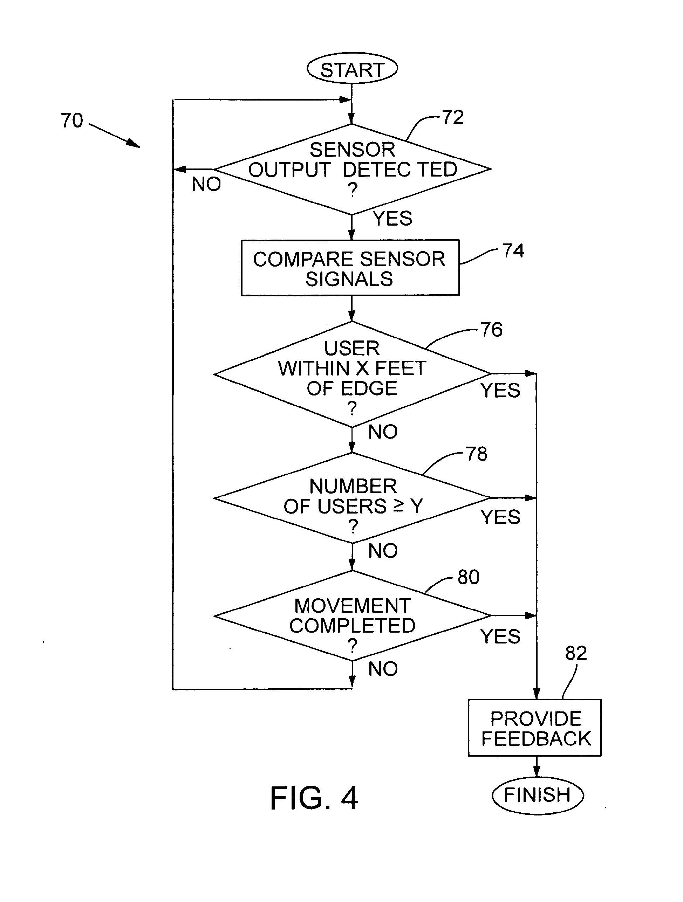

Referring now to FIG. 4, a method 70 of operating the trampoline 10 is illustrated according to various embodiments. Assuming that the switch 36 is ON and users 21 are using the trampoline 10, the method 70 can begin in decision block 72, wherein it is determined whether there is any output from any of the sensors 18a-18h. The method 70 can loop until there is sensor output, whereupon in block 74, the output from multiple sensors 18a-18h is compared. In some embodiments, output from all of the sensors 18a-18h is compared. The remainder of the method 70 can depend on the comparison of the output of the sensors 18a-18h.

For instance, in block 76, it is determined if a user is within a predetermined distance, X, of the edge 22. X can be any suitable distance (e.g., 6 inches or less). Impacting the enclosure system 16 can also cause block 76 to be answered affirmatively. If block 76 is answered affirmatively, then block 82 follows, and light, sound, or other feedback signals are provided.

If block 76 is answered negatively, then block 78 follows, and it is determined whether the number of users is greater than or equal to a predetermined limit, Y. Y can be any suitable number. If block 78 is answered affirmatively, then, block 82 follows, and the feedback signals are provided.

If block 78 is answered negatively, then block 80 follows, and it is determined whether a predetermined movement is completed by the user 21. For instance, if output from the sensors 18a-18h indicates that the user 21 has completed a "lap" around the mat 14, then decision block 80 can be answered affirmatively, block 82 can follow, and feedback can be provided.

If block 80 is answered negatively, then the method 70 can loop back to the beginning. It will be appreciated that other the conditions of the users 21 described above or otherwise can be detected using the method 70 as well.

Thus, the feedback provided can enhance jumping activities on the trampoline 10 and/or provide warnings about the jumping activity, etc. Moreover, the system 20 can emit predetermined and preprogrammed patterned feedback. For instance, the speaker 40 can automatically count the number of jumps performed by the user. Various games can be conducted using the system 20 as well.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A trampoline comprising:
a frame;
a jumping mat assembly that is supported by the frame to allow at least one user to bounce thereon;
a sensor system that includes a plurality of sensors that are supported by at least one of the frame and the jumping mat assembly, the plurality of sensors being spaced apart from each other, at least two of the plurality of sensors generating a respective signal due to the at least one user impacting the jumping mat assembly;
a feedback system that provides a feedback signal; and
a controller that compares the respective signals from the at least two of the plurality of sensors to determine a status of the at least one user, the controller operable to cause the feedback system to provide the feedback signal according to the determined status of the at least one user.

2. The trampoline of claim 1, wherein the controller compares the respective signals from the at least two of the plurality of sensors to determine at least one of:
a location of the at least one user relative to the jumping mat assembly,
whether the at least one user has completed a predetermined movement relative to the jumping mat assembly, and
a number of the at least one users that are atop the jumping mat assembly.

3. The trampoline of claim 2, wherein the jumping mat assembly includes a peripheral edge, wherein the controller compares the respective signal from the at least two of the plurality of sensors to determine whether the at least one user is within a predetermined distance of the peripheral edge, wherein the controller is operable to cause the feedback system to provide the feedback signal when the at least one user is within the predetermined distance of the peripheral edge.

4. The trampoline of claim 2, wherein the controller compares the respective signals from the at least two of the plurality of sensors to determine whether the at least one user has completed a lap around the jumping mat assembly, wherein the controller is operable to cause the feedback system to provide the feedback signal when the at least one user has completed the lap around the jumping mat assembly.

5. The trampoline of claim 2, wherein the controller compares the respective signals from the at least two of the plurality of sensors to determine whether the number of users is greater than a predetermined limit, and wherein the controller is operable to cause the feedback system to provide the feedback signal when the number of users is greater than the predetermined limit.

6. The trampoline of claim 1, wherein at least one of the plurality of sensors includes at least one of an accelerometer, a proximity sensor, a camera, a motion detector, and a piezoelectric sensor.

7. The trampoline of claim 1, further comprising an enclosure system that encloses at least a portion of the jumping mat assembly, wherein the sensor system includes an enclosure sensor that is supported by the enclosure system, the enclosure sensor operable to detect that the enclosure system has been impacted by the at least one user.

8. The trampoline of claim 7, wherein the controller compares the respective signals from the at least two sensors and the enclosure sensor to cause the feedback system to provide the feedback signal according to the determined status of the at least one user.

9. The trampoline of claim 1, wherein the feedback system provides an audible feedback signal.

10. The trampoline of claim 1, wherein the feedback system provides a visible feedback signal.

11. The trampoline of claim 1, wherein the feedback system includes a feedback device that provides the feedback signal, the feedback device being remote from the frame and the jumping mat assembly.

12. A trampoline comprising:
a frame;
a jumping mat assembly that is supported by the frame to allow a user to bounce thereon;
an enclosure system that encloses at least a portion of the jumping mat assembly;
a sensor system that detects the user impacting the enclosure system;
and
a feedback system that provides a feedback signal when the sensor system detects the user impacting the enclosure system.

13. The trampoline of claim 12, wherein the enclosure system includes at least one vertical support that is coupled to the frame and that extends away from the frame, wherein the enclosure system includes a flexible wall member that is supported by the at least one vertical support, wherein the sensor system includes a sensor that is attached to the vertical support.

14. The trampoline of claim 12, wherein the enclosure system includes at least one vertical support that is coupled to the frame and that extends away from the frame, wherein the enclosure system includes a flexible wall member that is supported by the at least one vertical support, wherein the sensor system includes a sensor that is attached to the flexible wall member.

15. The trampoline of claim 12, wherein the feedback system includes an audio feedback device that emits an audible feedback when the sensor system detects the user impacting the enclosure system.

16. The trampoline of claim 12, wherein the feedback system includes a visual feedback device that emits a visible feedback when the sensor system detects the user impacting the enclosure system.

17. The trampoline of claim 12, wherein the feedback system includes a feedback device that provides the feedback signal, the feedback device being remote from the frame, the jumping mat assembly, and the enclosure system.

18. The trampoline of claim 12, wherein the sensor system includes at least one of an accelerometer, a proximity sensor, a camera, a motion detector, and a piezoelectric sensor to detect the user impacting the enclosure system.

19. A trampoline comprising:
a frame;
a jumping mat assembly that is supported by the frame to allow at least one user to bounce thereon;
an enclosure system that encloses at least a portion of the jumping mat assembly, the enclosure system including a vertical support that is coupled to the frame and that extends away from the frame, the enclosure system also including a flexible wall member that is supported by vertical support;
a sensor system that includes a plurality of first sensors that are coupled to one of the frame and the jumping mat assembly to detect bouncing of the at least one user on the jumping mat, the plurality of first sensors being spaced apart from each other, the sensor system also including a second sensor that is fixed to one of the vertical support and the flexible wall member to detect impact of the at least one user with the enclosure system;
a feedback system that provides a feedback signal; and
a controller that compares output from the plurality of first sensors to determine a status of the at least one user, the controller operable to cause the feedback system to provide the feedback signal according to the determined status of the at least one user, the controller also operable to cause the feedback system to provide the feedback signal when the second sensor detects impact of the at least one user with the enclosure system.

20. A method of providing feedback for at least one user of a trampoline comprising:
generating signals from at least two sensors due to at least one user impacting a jumping mat assembly of the trampoline, the at least two sensors supported by the trampoline and spaced apart from each other;
comparing the signals of the at least two sensors;
detecting a status of the at least one user based on the comparison of the signals; and
providing a feedback signal based on the detected status.

21. The method of claim 20, wherein detecting the status includes at least one of:
detecting a location of the at least one user relative to the jumping mat,
detecting whether the at least one user has completed a predetermined movement relative to the jumping mat assembly, and
detecting a number of the at least one user that are atop the jumping mat assembly.
